Europäisches Patentamt

European Patent Office

Office européen des brevets

(19)

(11) Numéro de publication : **0 205 390**
**B1**

(12) # FASCICULE DE BREVET EUROPÉEN

(45) Date de publication du fascicule du brevet :
11.10.89

(51) Int. Cl.⁴ : **B 65 G 57/24**, B 65 G 57/06

(21) Numéro de dépôt : 86401277.8

(22) Date de dépôt : 12.06.86

(54) Procédé et installation pour le chargement dans un conteneur et le déchargement de ce conteneur de pièces disposées en lits horizontaux.

(30) Priorité : 12.06.85 FR 8508869

(43) Date de publication de la demande :
17.12.86 Bulletin 86/51

(45) Mention de la délivrance du brevet :
11.10.89 Bulletin 89/41

(84) Etats contractants désignés :
CH DE FR GB IT LI

(56) Documents cités :
FR–A– 2 387 179
US–A– 3 788 497
US–A– 4 299 524

(73) Titulaire : **Rossi, Anne Marie, épouse Pencé Courcelles**
**F-89570 Neuvy Sautour (FR)**

(72) Inventeur : **Rossi, Anne Marie, épouse Pencé Courcelles**
**F-89570 Neuvy Sautour (FR)**

(74) Mandataire : **Dawidowicz, Armand Cabinet Lemonnier-Dawidowicz**
**4, Boulevard Saint Denis**
**F-75010 Paris (FR)**

## Description

La présente invention concerne la manipulation de pièces disposées en lits horizontaux et notamment de pièces cylindriques ou tubulaires. En pratique, la manipulation peut avoir pour but la reprise de telles pièces dans des conteneurs pour assurer l'alimentation de machines d'usinage et le chargement desdites pièces dans des conteneurs en vue de leur stockage, de leur transport à un autre stade d'usinage ou de leur conditionnement pour l'expédition.

Dans la technique usuelle, les pièces notamment cylindriques sont chargées le plus souvent en vrac dans le conteneur et, lorsqu'il est nécessaire de les ranger, en général génératrice contre génératrice, dans le couloir d'alimentation d'une machine, elles sont déversées sur un plateau goulotte incliné qui est soumis à des vibrations pour assurer la répartition en un seul lit avec mise en parallèle des pièces. Dans ce type d'appareil, les pièces sont soumises à des chocs, ce qui risque de les marquer lorsqu'il s'agit de pièces métalliques ou même de les briser s'il s'agit de pièces en un matériau fragile.

On a cherché également à les manipuler par des robots, le robot permettant d'assurer un positionnement parfaitement défini de la pièce tant au chargement qu'au déchargement. La solution du robot est beaucoup plus onéreuse que celle antérieurement connue des couloirs d'alimentation et d'évacuation dans lesquels peuvent rouler les pièces cylindriques ou tubulaires et la manipulation pièce par pièce au moyen d'un robot est une opération relativement lente.

Le procédé conforme à l'invention pour le chargement en conteneur et/ou le déchargement à partir dudit conteneur de pièces disposées en lits est caractérisé en ce que l'on utilise un conteneur dont une paroi verticale est amovible, en ce que l'on place ce conteneur devant et à proximité d'une table dont la largeur en bout est légèrement inférieure à la largeur intérieure du côté de la paroi amovible du conteneur, table sur laquelle sont amenées les pièces à charger ou décharger avec la face du conteneur dont la paroi amovible a été enlevée faisant face vers ladite table, on règle la hauteur du conteneur pour amener légèrement au-dessus du niveau du plan de la table le niveau inférieur de la couche supérieure ou lit supérieur de pièces à décharger ou légèrement en dessous du niveau du plan de la table le niveau supérieur du lit supérieur des pièces déjà chargées dans le conteneur, on fait avancer ladite table dans le conteneur pour amener son extrémité à proximité de l'extrémité du lit de pièces qui doit être déchargé ou à proximité de l'extrémité du lit de pièces déjà chargées sur lequel doit être chargé le lit de pièces se trouvant sur la table et on transporte en un seul bloc les pièces formant un lit, de la table pour les déposer sur la surface supérieure du lit supérieur de pièces se trouvant dans le conteneur ou à partir du lit supérieur de pièces se trouvant dans le conteneur pour les déposer sur la table, par un déplacement dirigé selon la direction de la longueur des pièces.

Dans le cas de pièces cylindriques ou tubulaires les pièces peuvent être placées en appui côte à côte selon leurs génératrices, les pièces d'un lit se trouvant dans le conteneur étant en appui contre les faces latérales dudit conteneur ou les pièces d'une couche se trouvant sur la table, laquelle a sensiblement la largeur d'un lit de pièces dans le conteneur, étant en appui, par les pièces aux extrémités de la couche, contre des éléments de butées coopérant avec ladite table. Les pièces notamment de forme complexe non cylindrique peuvent également être disposées en lit sur un plateau, chaque plateau comportant au moins des bords latéraux formant appui pour le ou les plateaux placés au-dessus et chaque plateau, avec les pièces qu'il porte, formant un lit de pièces et la longueur des pièces au sens de la définition ci-dessus étant la longueur du plateau selon la direction de déplacement.

Dans le cas du déchargement, la table est, au début du cycle de déchargement d'un lit, déplacée en direction du conteneur et introduite dans celui-ci sensiblement jusqu'au contact de la face verticale la plus proche de l'empilage des lits de pièces, puis, après amenée par traction du lit de pièces sur la table, celle-ci est ramenée vers l'arrière jusqu'au poste de déchargement situé en dehors du conteneur où les pièces sont évacuées de la table. Lorsque les pièces sont cylindriques le déchargement est en général effectué en les faisant rouler transversalement à la direction de déplacement de la table.

Dans le cas du chargement, la table sur laquelle les pièces ont été amenées sous forme d'un lit est déplacée en direction du conteneur et introduite dans celui-ci pour venir légèrement au-dessus de l'emplacement où doivent être déposées les pièces et la table est retirée progressivement vers l'arrière pendant que les pièces sont poussées ou maintenues en place pour assurer le déplacement relatif des pièces par rapport à ladite table.

La présente invention a également pour objet une installation pour la mise en œuvre du procédé ci-dessus, cette installation comportant un bâti, une table mobile horizontalement selon une direction de ce bâti, des moyens pour déplacer de façon contrôlée ladite table selon ladite direction pour que son extrémité libre vienne en saillie par rapport à l'extrémité libre du bâti, au moins un conteneur constitué par au moins un fond et trois parois latérales verticales fixes, la face sans paroi latérale ayant une largeur un peu supérieure à la largeur de l'extrémité libre de la table, un moyen élévateur placé en face du bâti selon la direction de mobilité de la table et susceptible de déplacer verticalement de façon contrôlée le conteneur avec sa face sans paroi latérale en coïncidence avec la table de manière que l'extrémité de ladite table puisse être introduite dans ledit conteneur et des moyens pour déplacer sensiblement horizontalement des pièces entre l'intérieur dudit conteneur et la surface d'extrémité de la table.

Selon une autre caractéristique de l'invention et dans le cas de pièces cylindriques ou tubulaires, l'extrémité de la table sur laquelle sont amenées les pièces, lors de leur déchargement ou en vue de leur chargement, est constituée par une tablette articulée sur la table autour d'un de ses bords latéraux, ladite tablette venant, en position de recul de la table, au droit du couloir d'alimentation ou du couloir d'évacuation de types connus allant de l'installation à une machine desservie et inversement, des moyens permettant de faire varier l'inclinaison de ladite tablette entre la position horizontale et une position inclinée préfixée.

Selon une autre caractéristique s'appliquant également au chargement dans le conteneur de pièces cylindriques ou tubulaires, le bâti portant la table comporte une ouverture sur son bord latéral venant en face du couloir d'évacuation de type connu allant de la machine desservie à l'installation, cette ouverture se trouvant de niveau avec le bord de la tablette opposé à l'articulation dans la position relevée de la tablette et des taquets relevables sont prévus à l'extrémité dudit couloir d'évacuation et au droit de ladite ouverture pour retenir les pièces sur ledit couloir lorsque l'ouverture de la table n'est pas alignée avec la sortie du couloir.

Selon une autre caractéristique et lorsque les pièces à manipuler ou la face verticale arrière du plateau qui les porte sont en un matériau magnétique, les moyens pour déplacer sensiblement horizontalement les pièces entre l'intérieur dudit conteneur et la surface d'extrémité de la table sont de préférence constitués par un électro-aimant mobile vers l'avant et vers l'arrière relativement à ladite table. L'électro-aimant présente en effet l'avantage d'avoir une surface active plane qui peut s'appliquer contre la partie supérieure des faces frontales des pièces, indépendamment de leur longueur et de leur section, et la puissance de l'électro-aimant peut être facilement modifiée en fonction du poids des pièces pour éviter l'entraînement de pièces adjacentes autres que celles du lit manipulé. Au cours du fonctionnement l'électro-aimant retenant les pièces par attraction magnétique les fait passer du conteneur sur la table ou de la table sur le lit supérieur de la pile de pièces la plus frontale.

Dans le cas de pièces tubulaires fragiles ou en un matériau non magnétique, l'électro-aimant peut être remplacé par un peigne dont les doigts viennent s'engager dans les forages des pièces tubulaires ou dans les canaux subsistant dans l'empilage entre les pièces cylindriques. Ce dispositif de préhension permet de soulever et déposer les pièces mais le peigne doit être adapté au moins à la section des pièces à manipuler et comporter éventuellement un correcteur de positionnement lorsque la position latérale du lit dans le conteneur varie au-delà d'une certaine tolérance.

Selon une autre caractéristique et dans le cas du déchargement de pièces, le bord avant de la table porte une traverse de détection de la face frontale de l'empilage de pièces constituant le lit situé en dessous du lit de pièces à décharger, cette traverse de détection commandant par son enfoncement l'arrêt du dispositif moteur commandant l'avance de la table et son inversion sur une faible distance.

Selon une autre caractéristique et dans le cas du chargement de pièces, le bord avant de la table comporte un détecteur de la surface du lit supérieur de pièces sur lequel doivent être chargées les pièces, détecteur qui contrôle le mouvement de montée de l'élévateur portant le conteneur.

Selon une autre caractéristique la paroi amovible du conteneur est engagée, par ses extrémités latérales, dans deux rainures verticales en vis-à-vis réalisées dans les deux parois latérales du conteneur perpendiculaires à la paroi amovible, une pluralité de rainures étant prévues dans chacune desdites parois latérales. Cette disposition permet de régler la position de la paroi latérale amovible après chargement du conteneur en fonction de la longueur des pièces et du nombre de piles de pièces disposées bout à bout.

L'invention sera décrite plus en détail ci-après sous forme d'une installation manipulant des pièces cylindriques avec référence aux dessins ci-annexés dans lesquels :

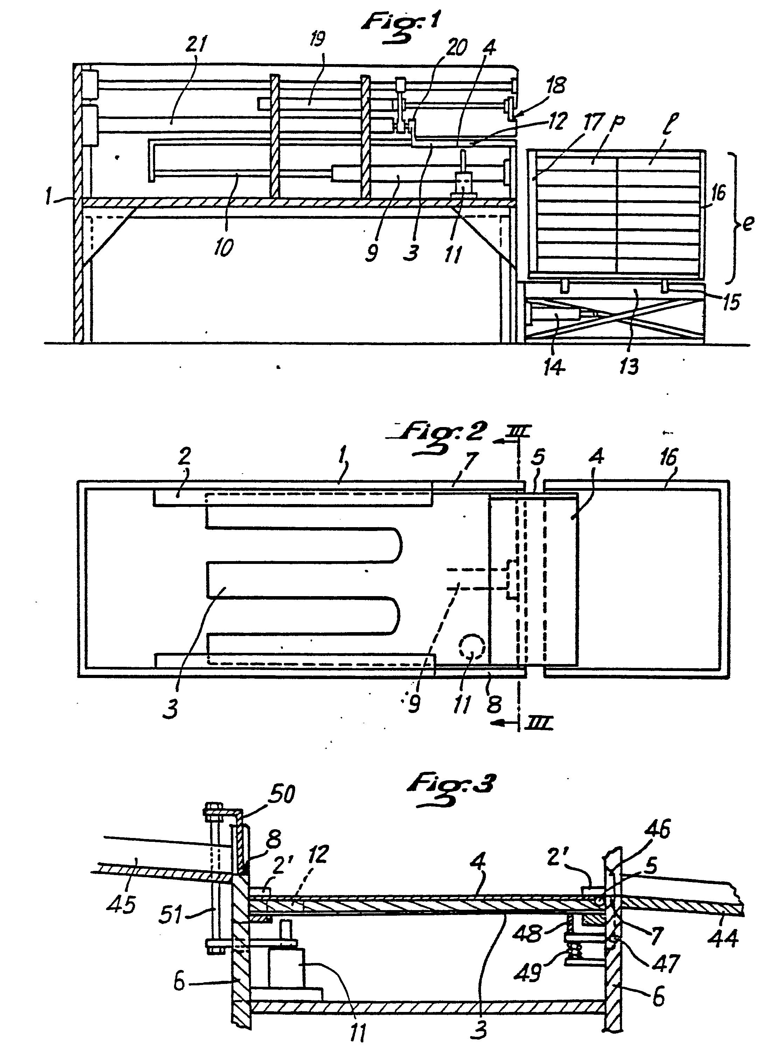

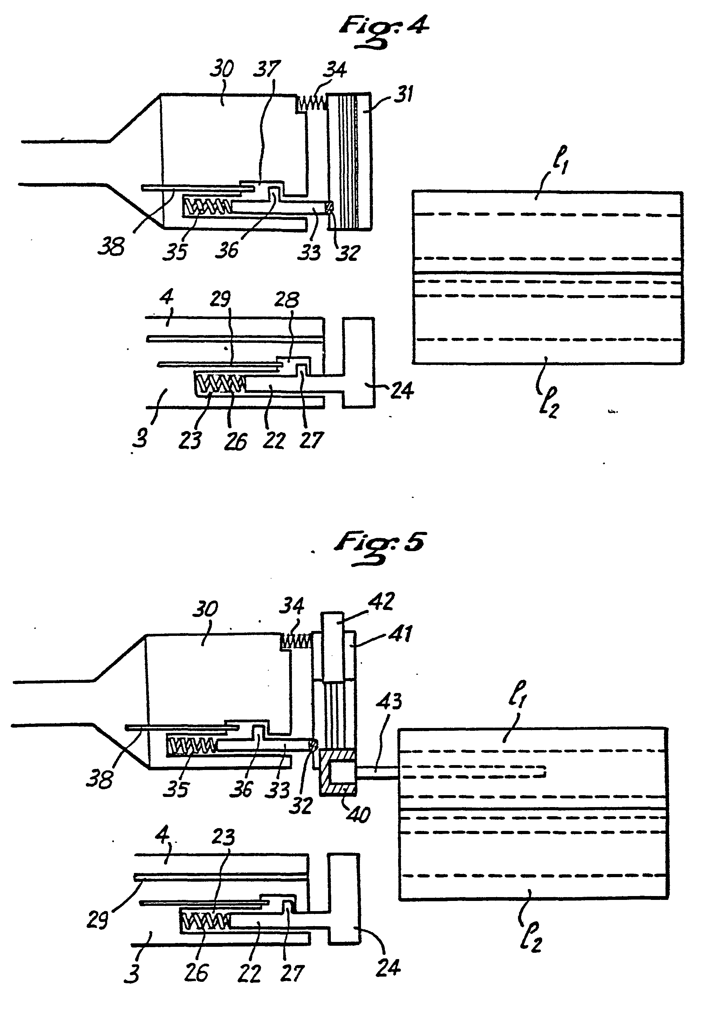

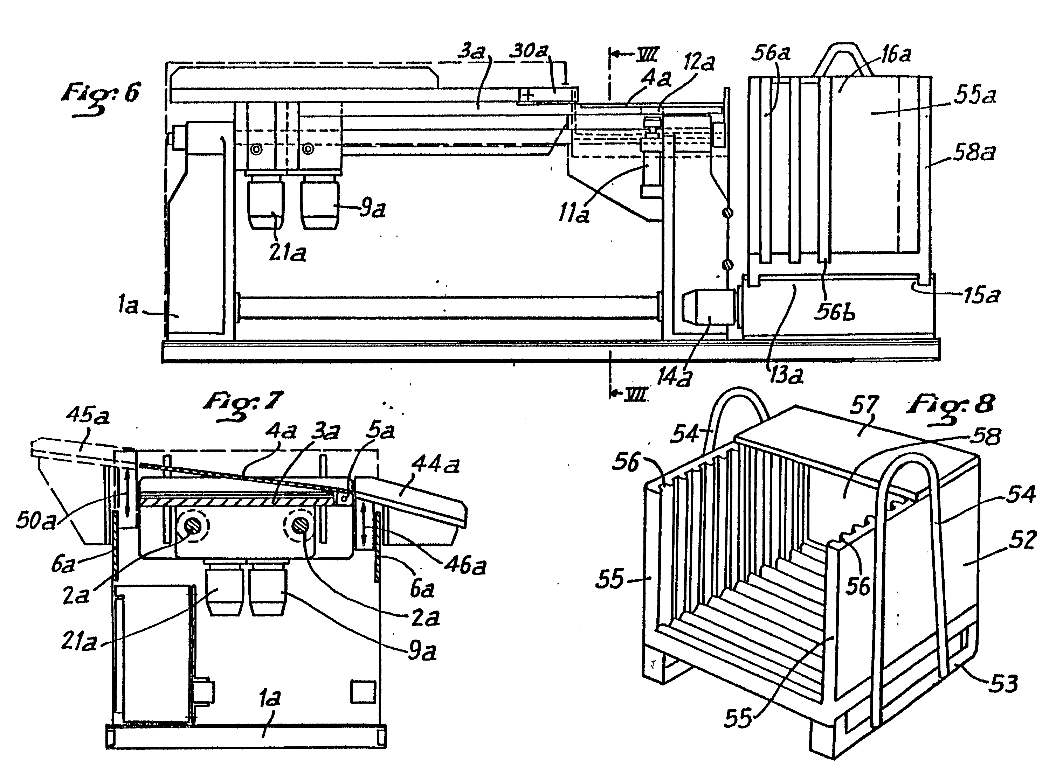

La figure 1 est une vue en coupe longitudinale de l'installation conforme à l'invention ; la figure 2 en est une vue en plan schématique ; la figure 3 est une vue en coupe à plus grande échelle par III-III de figure 2 ; la figure 4 est une vue en coupe de détail de la partie avant de la table et du bras de préhension, la figure 5 est une vue analogue à la figure 4 pour un autre mode de réalisation ; la figure 6 est une vue en élévation latérale d'une installation selon un autre mode de réalisation ; la figure 7 est une vue en coupe transversale par VII-VII de figure 6 et la figure 8 est une vue en perspective d'un conteneur pour la mise en œuvre de l'invention.

La machine rentrant dans l'installation des figures 1 à 3, comporte un bâti 1 de forme rectangulaire sur les deux côtés duquel sont fixées deux glissières 2 horizontales et parallèles. Dans ces glissières 2 coulissent les bords d'une table 3. Sur la partie avant de cette table 3 repose une tablette 4 qui est articulée autour d'une charnière 5. La paroi latérale 6 du bâti et l'aile supérieure 2' de la glissière qui se trouvent du côté de la charnière 5 sont interrompues sur une longueur 7 qui correspond à la largeur de la tablette 4 de manière que le bord supérieur 7 de la paroi latérale 6 soit de niveau avec le bord latéral de la tablette. De l'autre côté, seule la partie supérieure de la paroi 6 est supprimée sur une même longueur pour donner un bord supérieur 8 de la paroi latérale 6 qui soit légèrement au-dessus du niveau de la table 3.

Le coulissement de la table 3 sur les glissières 2 est commandé par un vérin 9 dont l'extrémité de la tige 10 en U du piston est solidarisée avec le bord arrière de la table. Un vérin 11 porté par le bâti est placé de manière à se trouver, en position reculée de la table 3, en dessous d'une lumière 12 réalisée dans la table 3 à l'opposé de la charnière 5. La tige de ce vérin 11 peut en conséquence soulever la tablette 4 pour évacuer, par dessus le bord 7 en face duquel se trouve un canal d'alimentation 44, les pièces cylindriques qui ont été amenées sur la tablette ou pour amener le bord de la tablette opposé à la charnière 5 de niveau avec le bord 8 qui peut constituer l'extrémité d'un couloir d'évacuation 45. Dans ce dernier cas, les pièces descendent le long de la tablette 4 inclinée pour former un lit sur cette tablette, le lit étant appuyé par sa première pièce contre des taquets 46 qui viennent au-dessus du bord 7. Ces taquets 46 sont par exemple des leviers en L articulés en 47 sur le bâti et dont l'autre bras vient en appui contre une came 48, les taquets étant éclipsés par l'action de ressorts 49 lorsque lesdits taquets 46 sont en face d'une échancrure de la came 48 correspondant à l'alignement de la tablette 4 avec le rebord 7. Lorsque le vérin 11 fait descendre la tablette 4, il ferme simultanément une porte 50 au-dessus du bord 8 pour arrêter les pièces cylindriques qui descendent dans le couloir d'évacuation 45. La porte 50 est reliée par une tringlerie 51 qui pourrait être également une transmission d'un autre type à la tige du vérin 11.

En face de l'extrémité avant du bâti est monté un plateau élévateur horizontal 13 dont les déplacements verticaux sont commandés par un vérin 14 ou tout autre dispositif moteur connu. Sur le plateau élévateur 13 peuvent être montés, en étant parfaitement centrés par des taquets 15, des conteneurs 16 destinés à recevoir des pièces p notamment cylindriques et tubulaires qui sont disposées par lits l, les lits formant des empilages e. Chaque lit pourrait également être constitué par un plateau comportant au moins deux parois latérales et de préférence également une paroi tournée vers la table, plateau sur lequel sont disposées les pièces de forme complexe non cylindriques, l'empilage étant constitué par les plateaux superposés par leurs parois latérales. Dans la figure 1, on a représenté un conteneur comportant deux empilages de huit lits. La paroi 17 du conteneur est amovible de manière que les faces frontales des pièces de l'empilage se trouvant contre cette paroi ou la paroi arrière des plateaux formant le premier empilage soient à nu. Cette paroi 17 peut être constituée par exemple par deux demi-portes ouvrantes articulées le long de leurs bords verticaux sur les bords verticaux des faces latérales du conteneur et rabattables sur lesdites faces latérales. Cette paroi 17 peut être constituée, dans les conteneurs utilisés pour des pièces de longueurs variables, par une double cloison dont l'épaisseur est réglable pour que la paroi 17 constitue, après mise en place, une surface d'appui pour la face avant de l'empilage frontal. De préférence toutefois le conteneur est réalisé comme décrit ci-après avec référence à la figure 8.

Dans le cas d'une installation utilisée pour le déchargement, un détecteur 18 monté en bout de la tige d'un vérin 19 peut être amené au-dessus du plateau élévateur 13 pour détecter la position du lit supérieur de pièces et commander le vérin 14 de manière que le lit supérieur l de l'empilage e frontal soit au niveau voulu par rapport au niveau de la table. Dans le cas d'une machine utilisée pour le chargement, un détecteur équivalent est monté sous le bord avant de la table pour commander le vérin 14 de manière que la table se trouve, avant le début du processus de chargement, à une faible hauteur au-dessus du lit supérieur de pièces sur lequel va être déposé un nouveau lit de pièces.

L'installation comporte encore un bras de manipulation 20 susceptible de recevoir un déplacement selon la direction de déplacement de la table 3 par l'intermédiaire d'un vérin 21 ou autre dispositif moteur équivalent.

Comme illustré à la figure 2, l'extrémité de la table 3 surmontée par la tablette 4 pénètre, en étant entraînée par le vérin 9, entre les deux parois latérales du conteneur 16. Dans la face avant de cette table est montée coulissante par un certain nombre de doigts 22 coulissant dans des forages longitudinaux 23 de la table, une réglette 24. Cette réglette est sollicitée vers la position sortie par des ressorts 26 et sa course est limitée par un ergot 27 porté par un doigt 22 se déplaçant dans une saignée 28. Dans sa position la plus en arrière, l'ergot 27 ferme le microcontact d'un circuit 29 qui commande l'arrêt de l'alimentation du vérin 9 et un léger recul de la table. Au cours de l'avance de la table, la réglette 24 vient en butée contre la face terminale d'un lit $l_2$ de l'empilage le plus frontal des pièces dans le conteneur 16. Ce lit se trouve comme exposé ci-dessus à un niveau réglé par le détecteur 18 commandant le vérin 14 et est le deuxième lit dans le cas où l'on voit décharger le lit $l_1$ (Fig. 4). Dans le cas du chargement d'un nouveau lit, la réglette 24 vient en appui contre un lit $l_1$ déjà chargé dans une pile plus proche de la paroi de fond que la nouvelle pile en formation ou contre ladite paroi de fond, la table se trouvant au-dessus du lit sur lequel doit être chargé ce nouveau lit.

L'organe de préhension et de manutention des pièces est, par exemple en cas de déchargement des pièces, constitué par une traverse 30 montée au bout de la tige du vérin 21. En avant de cette traverse 30 est montée une bobine électromagnétique plate 31 qui est articulée à sa partie inférieure en 32 à l'extrémité de doigts 33 coulissant dans les forages longitudinaux de la traverse 30 et qui est maintenue élastiquement à sa partie supérieure par des ressorts 34. Les doigts 33 sont repoussés par des ressorts 35 et leur course est limitée par des ergots 36 se déplaçant dans une saignée 37. En fin de course arrière l'un des ergots 36 ferme le micro-contact d'un circuit 38. Quand la bobine 31 est repoussée vers l'arrière du fait de sa butée contre la face frontale du lit $l_1$, lors de son avance par le vérin 21, l'ergot 36 établit le contact dans le circuit 38. La bobine 31 est alors mise sous tension et attire les pièces constituant le lit l₁. L'alimentation du vérin 21 est simultanément coupée. Le vérin 14 est alors mis à l'échappement pour que le conteneur 16 descende d'une valeur réglable, les pièces du lit l₁ se trouvant de ce fait soulevées au-dessus des pièces du lit l₂. Le vérin 21 revient alors en arrière et amène le lit de pièces au-dessus de la tablette 4. Au moment où les pièces sont au-dessus de la tablette 4, position qui est détectée par tout moyen connu, l'alimentation de la bobine 31 est réduite puis coupée. Sous le poids des pièces fixées sur la face avant de la bobine 31 celle-ci bascule autour de l'axe 32, le mouvement étant amorti par les ressorts 34, jusqu'à ce que les pièces prennent appui par une extrémité sur la tablette 4, puis leur autre extrémité glisse sur la face avant de la bobine jusqu'à ce que le lit soit en appui sur la tablette 4. L'alimentation de la bobine est alors complètement coupée et le vérin 21 recule le bras de préhension. Le vérin 9 ramène ensuite la table 3 et la tablette 4 portant le lit de pièces l₁ vers l'arrière. Lorsque le vérin 11 se trouve au-dessous de la lumière 12 il est allongé, ce qui incline la tablette 4 par rotation autour de la charnière 5 et les pièces p constituant le lit l₁ sont évacuées en passant au-dessus du bord 7 de la paroi latérale 6 du bâti 1. Lorsque le dernier tube est évacué de la tablette 4, un détecteur commande la mise à l'échappement du vérin 11 et la tablette 4 redescend s'appliquer sur la table 3.

Le dispositif de préhension et de manipulation des pièces ci-dessus décrit peut également être utilisé pour le chargement des pièces dans le conteneur mais il peut être simplifié puisqu'il a seulement pour rôle de maintenir les pièces en place pendant le recul de la table pour que lesdites pièces tombent en basculant sur le lit inférieur de pièces.

Dans le mode de réalisation de la figure 5, la bobine 31 est remplacée par une seconde traverse 40 qui peut coulisser verticalement dans des glissières latérales d'un bloc formant tête de préhension 41 sous l'action de micro-vérins 42 d'axes verticaux. Dans la traverse 40 sont montées, avec un écartement correspondant à l'écartement des tubes p dans le lit, des dents 43 qui forment un peigne horizontal. Le bloc de préhension 41 est monté sur la traverse 30 de la même manière que la bobine électro-magnétique 31. Lorsque le vérin 21 avance la tête de préhension 20 ainsi constituée avec la traverse 40 à mi-hauteur, les dents 43 s'engagent à raison d'une dans chaque tube. Lorsque la butée de la traverse 40 sur la face d'extrémité des tubes du lit l₁ ferme le contact 38, l'alimentation du vérin 21 est arrêtée et les micro-vérins 42 sont alimentés pour soulever la traverse 40 qui entraîne avec elle les tubes du lit supérieur l₁. Le vérin 21 est alors inversé pour amener les tubes suspendus aux dents 43 au-dessus de la tablette 4. L'alimentation des micro-vérins 42 est inversée, ce qui dépose les tubes sur ladite tablette et le vérin 21 recule alors au maximum en laissant le lit l₁ sur la

tablette 4 après quoi le fonctionnement se poursuit comme décrit ci-dessus avec référence à la figure 4.

Au lieu de pénétrer dans les tubes du lit l₁, les dents 43 de largeur et de section adéquates pourraient pénétrer dans les vides entre les surfaces périphériques de pièces cylindriques empilées. Dans le cas où les pièces sont portées par un plateau le dispositif de préhension et de manipulation peut être modifié et être solidarisé avec le plateau à manipuler soit par un moyen magnétique tel que ci-dessus, soit par tout moyen connu tel que pince, crochet ou autre.

Lorsque le plateau élévateur 13 se trouve dans la position complètement relevée, le retour du vérin 9 commande le retour du vérin 14 à sa position de départ, l'arrêt du cycle et le déclenchement d'un avertisseur sonore ou lumineux.

Dans la description ci-dessus les organes moteurs assurant les divers déplacements ont été représentés et décrits comme étant des vérins hydrauliques mais ils pourraient être remplacés par des vérins à vis à commande par moteurs électriques, par des crémaillères associées aux pignons de sortie de moteurs électriques ou par des élévateurs à chaînes ou à câbles.

Une telle variante de réalisation est représentée dans les figures 6 et 7 dans lesquelles les mêmes références affectées de l'indice a désignent les mêmes pièces ou des pièces équivalentes. La référence 1a désigne le bâti, la référence 2a les glissières qui sont constituées par des arbres filetés dont la rotation sous l'action du moteur électrique 9a déplace la table 3a vers l'avant ou vers l'arrière du bâti. La référence 4a désigne la tablette articulée en 5a autour d'un axe situé sur l'un des côtés de la table. La référence 6a désigne les côtés latéraux du bâti et la référence 11a le vérin pneumatique qui incline la tablette 4a par rotation autour de l'axe 5a, la tête de la tige de ce vérin passant à travers une lumière 12a réalisée dans la table 3a, lumière qui est en coïncidence avec la tête du vérin dans la position de recul maximum de la table 3a. Dans cette position la tablette 4a se trouve alignée avec un couloir 45a qui amène par roulement les pièces cylindriques à charger sur ladite tablette 4a ou avec un couloir 44a par lequel sont évacuées les pièces cylindriques qui ont été amenées sur la tablette 4a.

En face de l'extrémité avant du bâti est monté un plateau élévateur horizontal 13a dont les déplacements verticaux sont commandés par un moteur électrique 14a. Sur le plateau élévateur 13a peut être monté, en étant centré par des emboîtements 15a, un conteneur 16a. L'organe de préhension et de manutention des pièces est constitué par une traverse 30a dont les déplacements par rapport à la table 3a sont commandés par un moteur électrique 21a, les références 46a et 50a désignent des taquets, schématisés par des flèches, qui sont soulevés ou descendus, comme les taquets 46 ou la porte 50, par des vérins pneumatiques pour respectivement arrêter les pièces qui descendent en roulant sur la tablette 4a ou dans le couloir 45a.

Dans les parois latérales 55a et le fond du conteneur 16a sont prévues des gorges 56a, 56b dans lesquelles s'emboîtent les bords de la paroi amovible 17 comme cela sera décrit plus en détail ci-après avec référence à la figure 8.

Dans la figure 8, on a représenté un mode de réalisation préférentiel du conteneur qui permet de régler de façon simple la position de la paroi amovible 17 en fonction de la longueur des pièces et du nombre d'empilages mis en place dans le conteneur.

Le conteneur 52 comporte un piétement 53 qui permet le gerbage avec, fixés sur ce piétement, des arceaux métalliques formant une boucle 54 pour l'accrochage des crochets de moyens de levage et le centrage des conteneurs lors du gerbage. Les parois latérales 55 sont munies de gorges verticales parallèles 56 dans lesquelles peuvent être engagés les bords latéraux de la plaque formant la paroi amovible 17. Une plaque 57 qui n'occupe qu'une partie de la longueur du conteneur est soudée en pont sur les bords supérieurs des parois latérales 52 et du fond 58 pour augmenter la rigidité du conteneur.

## Revendications

1. Un procédé pour le chargement en conteneur et ou le déchargement à partir dudit conteneur de pièces disposées en lits horizontaux et notamment de pièces cylindriques ou tubulaires, caractérisé en ce que l'on utilise un conteneur (16) dont une paroi verticale (17) est amovible, en ce que l'on place ce conteneur devant et à proximité d'une table (3) dont la largeur en bout est légèrement inférieure à la largeur intérieure du côté de la paroi amovible (17) du conteneur (16), table (3) sur laquelle sont amenées les pièces à charger ou décharger (p) avec la face du conteneur dont la paroi amovible (17) a été enlevée faisant face vers ladite table, on règle la hauteur du conteneur pour amener légèrement au-dessus du niveau du plan de la table le niveau inférieur de la couche supérieure ou lit supérieur (1) de pièce à décharger ou légèrement en dessous du niveau du plan de la table le niveau supérieur du lit supérieur des pièces déjà chargées dans le conteneur, on fait avancer ladite table (3) dans le conteneur pour amener son extrémité à proximité de l'extrémité du lit de pièces (1) qui doit être déchargé ou à proximité de l'extrémité du lit de pièces déjà chargées sur lequel doit être chargé le lit de pièces se trouvant sur la table et on transporte en un seul bloc les pièces (p) formant un lit, de la table pour les déposer sur la surface supérieure du lit supérieur de pièces se trouvant dans le conteneur ou à partir du lit supérieur de pièces se trouvant dans le conteneur pour les déposer sur la table, par un déplacement dirigé selon la direction de la longueur des pièces.

2. Un procédé selon la revendication 1 pour le chargement et ou le déchargement de pièces cylindriques ou tubulaires, caractérisé en ce que les pièces (p) sont placées en appui côte à côte selon leurs génératrices, les pièces d'un lit se trouvant dans le conteneur (16) étant en appui contre les faces latérales dudit conteneur ou les pièces d'une couche se trouvant sur la table (3), laquelle a sensiblement la largeur d'un lit de pièces dans le conteneur (16), étant en appui, par les pièces aux extrémités de la couche, contre des éléments de butées (46-50) coopérant avec ladite table.

3. Un procédé selon la revendication 1 pour le chargement et ou le déchargement de pièces de forme complexe, caractérisé en ce que les pièces sont disposées en lit sur un plateau, chaque plateau comportant au moins des bords latéraux formant appui pour le ou les plateaux placés au-dessus et chaque plateau, avec les pièces qu'il porte, formant un lit de pièces et la longueur des pièces étant la longueur du plateau selon la direction de déplacement.

4. Un procédé selon l'une quelconque des revendications 1 à 3 utilisé pour le déchargement, caractérisé en ce que la table (3) est, au début du cycle de déchargement d'un lit, déplacée en direction du conteneur (16) et introduite dans celui-ci sensiblement jusqu'au contact de la face verticale la plus proche de l'empilage des lits de pièces, puis après amenée par traction du lit de pièces sur la table, celle-ci est ramenée vers l'arrière jusqu'au poste de déchargement situé en dehors du conteneur où les pièces sont évacuées de la table.

5. Un procédé selon la revendication 4, caractérisé en ce que lorsque les pièces sont cylindriques, le déchargement est effectué en les faisant rouler transversalement à la direction de déplacement de la table.

6. Un procédé selon l'une quelconque des revendications 1 à 3 utilisé pour le chargement, caractérisé en ce que la table (3) sur laquelle les pièces ont été amenées sous forme d'un lit est déplacée en direction du conteneur (16) et introduite dans celui-ci pour venir légèrement au-dessus de l'emplacement où doivent être déposées les pièces et la table est retirée progressivement vers l'arrière pendant que les pièces sont poussées ou maintenues en place pour assurer le déplacement relatif des pièces par rapport à ladite table.

7. Une installation pour la mise en oeuvre du procédé selon l'une quelconque des revendications 1 à 6, caractérisée en ce qu'elle comporte un bâti (1), une table (3) mobile horizontalement selon une direction de ce bâti, des moyens (9) pour déplacer de façon contrôlée ladite table selon ladite direction pour que son extrémité libre vienne en saillie par rapport à l'extrémité libre du bâti (1), au moins un conteneur (16) constitué par au moins un fond et trois parois latérales verticales fixes, la face sans paroi latérale ayant une largeur un peu supérieure à la largeur de l'extrémité libre de la table (3), un moyen élévateur (13) placé en face du bâti selon la direction de mobilité de la table (3) et susceptible de déplacer verticalement de façon contrôlée le conteneur

(16) avec sa face sans paroi latérale en coïncidence avec la table de manière que l'extrémité de ladite table puisse être introduite dans ledit conteneur (16) et des moyens (20) pour déplacer sensiblement horizontalement des pièces (p) entre l'intérieur dudit conteneur (16) et la surface d'extrémité de la table (3).

8. Une installation selon la revendication 7 pour le chargement et/ou le déchargement de pièces cylindriques ou tubulaires, caractérisée en ce que l'extrémité de la table (3) sur laquelle sont amenées les pièces, lors de leur déchargement ou en vue de leur chargement, est constituée par une tablette (4) articulée sur la table autour d'un de ses bords latéraux (5), ladite tablette venant, en position de recul de la table, au droit du couloir d'alimentation (45) ou du couloir d'évacuation (44) de types connus allant de l'installation à une machine desservie et inversement, des moyens (11) permettant de faire varier l'inclinaison de ladite tablette (4) entre la position horizontale et une position inclinée préfixée.

9. Une installation selon la revendication 8 utilisée pour charger un conteneur avec des pièces cylindriques ou tubulaires, caractérisée en ce que le bâti (1) portant la table (3) comporte une ouverture (8) sur son bord latéral venant en face du couloir d'évacuation (45) de type connu allant de la machine desservie à l'installation, cette ouverture (8) se trouvant de niveau avec le bord de la tablette (4) opposé à l'articulation (5) dans la position relevée de la tablette et des taquets relevables (50) sont prévus à l'extrémité dudit couloir d'évacuation (45) et au droit de ladite ouverture (8) pour retenir les pièces sur ledit couloir lorsque l'ouverture de la table n'est pas alignée avec la sortie du couloir.

10. Une installation selon l'une quelconque des revendications 7 à 9 utilisable avec des pièces à manipuler en un matériau magnétique ou un plateau portant lesdites pièces ayant une face verticale arrière en un matériau magnétique, caractérisée en ce que les moyens pour déplacer sensiblement horizontalement les pièces entre l'intérieur dudit conteneur (16) et la surface d'extrémité de la table (3) sont constitués par un électro-aimant (31) occupant, de préférence, toute la largeur de la table (3) et mobile vers l'avant et vers l'arrière relativement à ladite table.

11. Une installation selon l'une quelconque des revendications 7 à 9, caractérisée en ce que le dispositif de préhension des pièces est constitué par un peigne (43) dont les doigts viennent s'engager dans les forages des pièces tubulaires ou dans les canaux subsistant dans la pile entre les pièces cylindriques.

12. Une installation selon l'une quelconque des revendications 7 à 11 utilisable pour le déchargement de pièces, caractérisée en ce que le bord avant de la table (3) porte une traverse (24) de détection de la face frontale de l'empilage de pièces constituant le lit situé en dessous du lit de pièces à décharger, cette traverse de détection commandant par son enfoncement l'arrêt du dispositif moteur (9) commandant l'avance de la table (3) et son inversion sur une faible distance.

13. Une installation selon l'une quelconque des revendications 7 à 11 utilisable pour le chargement de pièces, caractérisée en ce que le bord avant de la table (3) comporte un détecteur de la surface du lit supérieur de pièces sur lequel doivent être chargées les pièces, détecteur qui contrôle le mouvement de montée du plateau élévateur (13) portant le conteneur (16).

14. Une installation selon l'une quelconque des revendications 7 à 13, caractérisée en ce que la paroi amovible (17) du conteneur (16) est engagée, par ses extrémités latérales, dans deux rainures (56) verticales en vis-à-vis réalisées dans les deux parois latérales (55) du conteneur perpendiculaires à la paroi amovible, une pluralité de rainures (56) étant prévues dans chacune desdites parois latérales.

## Claims

1. A method for the loading in a container and/or unloading from said container parts placed in horizontal layers and notably of cylindrical or tubular parts, characterized in that a container (16) is provided, a vertical wall (17) of which is removable, said container is placed in front of and adjacent a table (3) the width of which at the end is slightly less than the inner width of the side of the container (16) removable wall (17), on which table (3) are fed the parts (p) to be loaded or unloaded with the face of the container the removable wall (17) of which has been removed facing said table, the height of the container is set so as to bring slightly above the level of the table plane the layer level of the upper layer or upper bed (1) of parts to be discharged, or slightly below the level of the plane of the table the upper level of the upper bed of the parts already loaded in the container, said table (3) is being advanced in the container for bringing its end adjacent the end of the bed of parts (1) which has to be unloaded or adjacent the end of the bed of parts already loaded and on which has to be loaded the bed of parts which is on the table, and the parts (p) forming a bed are transported in a single block from the table in order to lay them on the upper surface of the upper bed of parts which is in the container, or from the upper bed of parts which is in the container for depositing them on the table, by a displacement in the direction of the parts length.

2. A method according to claim 1, for the loading and/or unloading of cylindrical or tubular parts, characterized in that the parts (p) are placed by bearing side by side along their generating lines, the parts of the bed which are in container (16) bearing against the side faces of said container or the parts of a layer which is on table (3), which has substantially the width of a bed of parts in container (16) bearing, via the parts which are at the ends of the layer, against abutment elements (46-50) coacting with said table.

3. A method according to claim 1, for the loading and/or unloading of parts of complex shape, characterized in that the parts are disposed as a bed on a plate, each plate including at least side edges forming a bearing surface for the plate or plates placed above and each plate, with the parts it carries, forming a bed of parts and the length of the parts being the length of the plate in the displacement direction.

4. A method according to any one of claims 1 to 3, used for the unloading, characterized in that the table (3) is, at the beginning of the unloading cycle of a bed, displaced in the direction of container (16) and introduced in the latter substantially until a contact is established with the nearest vertical face of the stack of beds of parts, then once a bed of parts has been brought by traction on the table, the latter is moved rearwardly up to the unloading station situated outside the container, where the parts are discharged from the table.

5. A method according to claim 4, characterized in that when the parts are cylindrical, the unloading is effected by rolling them transversely to the table displacement direction.

6. A method according to any one of claims 1 to 3, used for the loading, characterized in that the table (3) on which the parts have been fed so as to form a bed is displaced in the direction of the container (16) and introduced into said container in order to come slightly above the location where the parts have to be deposited and the table is progressively removed rearwardly while the parts are pushed or maintained in place for providing the relative displacement of the parts relative to said table.

7. An installation for practicing the method according to any one of claims 1 to 6, characterized in that it includes a frame (1), a table (3) mobile horizontally according to one direction of said frame, means (9) for displacing in a controlled manner said table along said direction so that its free end protrudes with respect to the frame (1) free end, at least one container (16) formed of at least one bottom and three fixed vertical side walls, the face without side wall having a width slightly greater than the width of the table (3) free end, an elevator means (13) placed facing the frame in the direction of mobility of the table (3) and adapted to move vertically in a controlled manner a container (16) with its face without side wall in register with the table so that the end of said table can be introduced in said container (16), and means (20) for displacing parts (p) substantially horizontally between the inside of said container (16) and the end surface of table (3).

8. An installation according to claim 7 for the loading and/or unloading of cylindrical or tubular parts, characterized in that the end of table (3) on which are deposited the parts, during their unloading or with a view to their loading, is formed of a shelf (4) articulated to the table about one of its side edges (5), said shelf coming, when the table is in a retracted position, in register with the feeding chute (45) or the discharge chute (44) of known types joining the installation to a serviced machine, or vice versa, means (11) allowing varying the inclination of said shelf (4) between the horizontal position and a preestablished inclined position.

9. An installation according to claim 8, used for loading a container with cylindrical or tubular parts, characterized in that the frame (1) carrying table (3) is formed with an opening (8) on its side edge which comes in register with the discharge chute (45) of known type joining the serviced machine to the installation, said opening (8) being at the level of the edge of shelf (4) which is opposite the articulation (5) in the upward position of the shelf and liftable dogs (50) are provided at the end of the discharge chute (45) and in register with said opening (8) for retaining the parts on said chute when the opening of the table is not in alignment with the chute outlet.

10. An installation according to any one of claims 7 to 9, used for parts to be handled and made of a magnetic material or a plate carrying said parts having a rear vertical face in a magnetic material, characterized in that the means for displacing substantially horizontally the parts between the inside of said container (16) and the end surface of table (3) are made of an electromagnet (31) occupying, prefereably, the whole width of table (3) and mobile to the front and to the rear with respect to said table.

11. An installation according to any one of claims 7 to 9, characterized in that the parts gripping device is made of a comb (43) the fingers of which come in engagement within holes of the tubular parts or in the channels remaining in the stack between the cylindrical parts.

12. An installation according to any one of claims 7 to 11, used for the unloading of parts, characterized in that the front edge of table (3) carries a crosspiece (24) for the detection of the frontal face of the stack of parts forming the bed situated below the bed of parts to be unloaded, said detection crosspiece controlling by the depth of its position the stoppage of the motor device (9) controlling the advance of table (3) and its reverse motion over small distance.

13. An installation according to any one of claims 7 to 11, used for the loading of parts characterized in that the front edge of the table (3) includes a sensor of the surface of the upper bed of parts on which the parts have to be loaded, said sensor controlling the upward motion of the elevator plate (13) carrying the container (16).

14. An installation according to any one of claims 7 to 13, characterized in that the removable wall (17) of the container (16) is engaged, by its side ends, into two vertical slots (56) facing each other and formed in the two side walls (55) of the container perpendicular to the removable wall, a plurality of slots (56) being provided in each of said side walls.

**Patentansprüche**

1. Verfahren zum Laden und Entladen von in horizontalen Schichten angeordneten Artikeln, insbesondere zylindrischen oder rohrförmigen Artikeln, in oder aus Behältern, dadurch gekennzeichnet, daß ein Behälter (1b) verwendet wird, dessen eine senkrechte Wand (17) entfernbar ist, indem man den Behälter vor und in die Nähe eines Tisches (3) stellt, dessen Breite am Ende etwas geringer ist als die Innenabmessung der Seite der entfernbaren Wand (17) des Behälters (16), sowie ein Tisch (3), auf den die zu ladenden oder zu entladenden Artikel (P) gelegt werden, wobei die Seite des Behälters, dessen entfernbare Wand (17) entfernt worden ist, dem genannten Tisch gegenüber angeordnet ist, die Höhe des Behälters eingestellt wird, so daß die untere Ebene der oberen Lage oder oberen Schicht (1) von Artikeln, die abgeladen werden sollen, leicht oberhalb des Tisches liegt oder leicht unterhalb des Tischniveaus, wenn die obere Ebene der oberen Schicht der Artikel schon in den Behälter geladen ist, der Tisch (3) in den Behälter geschoben wird, um sein Ende in die Nähe des Endes der Schicht (1) der Artikel zu bringen, die entladen werden soll, oder in die Nähe des Endes der bereits geladenen Schicht von Artikeln, auf die die Artikelschicht geladen werden soll, die sich auf dem Tisch befindet, und die eine Schicht bildenden Artikel (P) in einem Block vom Tisch transportiert werden, um sie auf der oberen Fläche der oberen Artikelschicht abzulegen, die sich im Behälter befindet, oder ausgehend von der oberen Artikelschicht, die sich im Behälter befindet, um sie auf den Tisch zu legen durch eine Verschiebung, gesteuert durch die Richtung der Länge der Artikel.

2. Verfahren nach Anspruch 1 zum Laden und Entladen von zylindrischen oder röhrenförmigen Artikeln, dadurch gekennzeichnet, daß die Artikel (P) aneinandergereiht werden entsprechend ihrer Erzeugung, wobei die Artikel einer Schicht, die sich im Behälter (1b) befinden, an den Seitenwänden des Behälters anliegen, oder die Artikel einer Schicht, die sich auf dem Tisch (3) befinden, der etwa die Breite einer Artikelschicht im Behälter (16) hat, durch die Artikel an den Enden der Schicht an den Anschlagelementen (46-50) anliegen, die mit dem Tisch zusammenwirken.

3. Verfahren nach Anspruch 1 zum Laden und Entladen von Artikeln komplexer Form, dadurch gekennzeichnet, daß die Artikel in einer Schicht auf eine Platte gelegt werden, wobei jede Platte wenigstens Seitenkanten aufweist, die der Platte oder den Platten, die daraufliegen, Halt geben, und daß jede Platte mit den Artikeln, die sie trägt, eine Artikelschicht bildet, wobei die Länge der Artikel der Länge der Platte in der Bewegungsrichtung entpsricht.

4. Verfahren nach einem der Ansprüche 1 bis 3 zum Entladen, dadurch gekennzeichnet, daß der Tisch (3) zu Beginn des Entladevorganges einer Schicht in Richtung des Behälters (16) bewegt wird und in ihn eingeführt wird etwa bis zum Kontakt mit der senkrechten Wand, die sich am nächsten zum Stapel der Artikelschichten befindet, und dann, nachdem die Artikelschicht auf den Tisch gezogen worden ist, nach hinten bis zum Entladeort gezogen wird, der außerhalb des Behälters liegt, dort, wo die Artikel vom Tisch entfernt werden.

5. Verfahren nach Anspruch 4, dadurch gekennzeichnet, daß das Entladen von zylindrischen Artikeln dadurch geschieht, daß diese im rechten Winkel zur Bewegungsrichtung des Tisches gerollt werden.

6. Verfahren nach einem der Ansprüche 1 bis 3 zum Laden, dadurch gekennzeichnet, daß der Tisch (3), auf den die Artikel in Form einer Schicht aufgebracht worden sind, in Richtung des Behälters (16) bewegt wird und in ihn eingeführt wird, um etwas oberhalb der Stelle zu kommen, wo die Artikel abgelegt werden sollen, und daß der Tisch fortschreitend nach hinten zurückgezogen wird, während die Artikel geschoben werden oder auf der Stelle gehalten werden, um die relative Bewegung der Artikel im Verhältnis zum Tisch zu gewährleisten.

7. Vorrichtung zur Durchführung des Verfahrens nach einem der Ansprüche 1 bis 6, gekennzeichnet durch einen Rahmen (1), einen entsprechend einer Richtung dieses Rahmens waagerecht beweglichen Tisch (3), Mittel (9) zur gesteuerten Bewegung des Tisches entsprechend der genannten Richtung, damit sein freies Ende hervorsteht im Verhältnis zum freien Ende des Rahmens (1), wenigstens einen Behälter (16), der wenigstens aus einem Boden und drei festen seitlichen senkrechten Wänden besteht, wobei die Seite ohne Seitenwand eine etwas größere Breite hat als das freie Ende des Tisches (3), eine Hubvorrichtung (13), die gegenüber dem Rahmen angeordnet ist entsprechend der Bewegungsrichtung des Tisches (3) und durch die der Behälter (16) gesteuert senkrecht bewegbar ist, wobei die Seite ohne Seitenwand in der Weise mit dem Tisch übereinstimmt, daß das Ende des Tisches in den Behälter (16) einführbar ist, und Mittel (20), um die Artikel (P) etwa waagerecht zwischen dem Innern des Behälters (16) und der äußeren Fläche des Tisches (3) zu verschieben.

8. Vorrichtung nach Anspruch 7 zum Be- und Entladen von zylindrischen oder röhrenförmigen Artikeln, dadurch gekennzeichnet, daß das Ende des Tisches (3), auf den die Artikel beim Entladen oder im Hinblick auf ihr Laden gebracht sind, aus einer Platte (4) besteht, die auf dem Tisch gelenkig um eine Seitenkante (5) angeordnet ist, wobei die Platte in Rücklaufposition des Tisches mit der Beschickungsrutsche (45) oder der Abgaberutsche (44) bekannter Art, von der Vorrichtung zu einer bedienbaren und umsteuerbaren Maschine führend, ausrichtbar ist, und daß Mittel vorgesehen sind (11), durch die die Neigung der Platte (4) zwischen der waagerechten Position und einer vorher festgelegten geneigten Position veränderbar ist.

9. Vorrichtung nach Anspruch 8 zum Beladen eines Behälters mit zylinderförmigen oder röhrenförmigen Artikeln, dadurch gekennzeichnet, daß der Rahmen (1), der den Tisch (3) trägt, eine Öffnung (8) an seiner Seitenkante aufweist, die gegenüber der von der bedienbaren Maschine zur Vorrichtung führenden Abgaberutsche (45) bekannter Art positionierbar ist, wobei diese Öffnung (8) sich auf gleicher Ebene mit dem Rand der Platte (4) befindet gegenüber dem Gelenk (5) in der angehobenen Position der Platte, und daß anhebbare Anschläge (50) vorgesehen sind am Ende der Abgaberutsche (45) und mittig der Öffnung (8), um die Artikel auf der Rutsche zu halten, wenn die Öffnung des Tisches nicht mit dem Ausgang der Rutsche ausgerichtet ist.

10. Vorrichtung nach einem der Ansprüche 7 bis 9 zur Verwendung bei zu handhabenden Artikeln aus einem magnetischen Material oder bei einer Platte, die die Artikel trägt, die eine senkrechte Rückseite aus einem magnetischen Material haben, dadurch gekennzeichnet, daß die Mittel die die Artikel etwa waagerecht zwischen dem Innern des Behälters (16) und der Endfläche des Tisches (3) bewegen, aus einem Elektromagneten (31) bestehen, der vorzugsweise die ganze Breite des Tisches (3) einnimmt und relativ zum Tisch vor- und rückwärts bewegbar ist.

11. Vorrichtung nach einem der Ansprüche 7 bis 9, dadurch gekennzeichnet, daß die Artikelgreifvorrichtung aus einen Kamm (43) besteht, dessen Zinken in die Bohrungen der röhrenförmigen Artikel oder in die im Stapel zwischen den zylindrischen Artikeln vorhandenen Kanäle greifen.

12. Vorrichtung nach einem der Ansprüche 7 bis 11 zum Entladen von Artikeln, dadurch gekennzeichnet, daß die Vorderkante des Tisches (3) einen Querbalken (24) trägt zum Abtasten der Vorderseite des Stapels von Artikeln, der die Schicht unterhalb der Artikelschicht bildet, die entladen werden soll, wobei dieser Abtast-Querbalken das Anhalten der Antriebsvorrichtung (9) steuert, die die Vorwärtsbewegung und Rückwärtsbewegung des Tisches (3) über eine geringe Entfernung steuert.

13. Vorrichtung nach einem der Ansprüche 7 bis 11 zum Laden von Artikeln, dadurch gekennzeichnet, daß die Vorderkante des Tisches (3) eine Anzeigeeinrichtung für die Oberfläche der oberen Anschläge aufweist, auf die die Artikel geladen werden sollen, wobei die Anzeigeeinrichtung die Aufwärtsbewegung der Hubplatte (13) steuert, die den Behälter trägt.

14. Vorrichtung nach einem der Ansprüche 7 bis 13, dadurch gekennzeichnet, daß die abnehmbare Wand (17) des Behälters (16) mit ihren seitlichen Enden in zwei senkrecht einander gegenüberliegende Nuten (56) eingreift rechtwinklig zu der abnehmbaren Wand, wobei eine Vielzahl von Nuten (56) in Jeder der Seitenwände vorgesehen ist.

**Fig. 1**

**Fig. 2**

**Fig. 3**

*Fig. 4*

*Fig. 5*

Fig. 6

Fig. 7

Fig. 8

3